# EUROPEAN PATENT SPECIFICATION

(11) **EP 1 897 283 B1**
(45) Date of publication and mention of the grant of the patent: **21.11.2012**
(21) Application number: 06769072.7
(22) Date of filing: 27.06.2006
(51) Int. Cl.: H04W 36/08, H04W 36/00

(54) **APPARATUS AND METHOD FOR PERFORMING FAST HANDOVER**
VORRICHTUNG UND VERFAHREN ZUR DURCHFÜHRUNG EINES SCHNELLEN HANDOVER
DISPOSITIF ET PROCEDE POUR L'EXECUTION DE TRANSFERT RAPIDE

(30) Priority: 28.06.2005 KR 20050056464
(43) Date of publication of application: 12.03.2008
(73) Proprietor: Samsung Electronics Co., Ltd., Suwon-si, Gyeonggi-do, 443-742 (KR)
(72) Inventor: PARK, Soo-Hong, Cheoin-gu,Yongin-si,Gyeonggi-do 449-851 (KR); KIM, Young-Keun, Gyeyang-gu,Incheon 407-713 (KR)
(74) Representative: Hewett, Jonathan Michael Richard
(86) International application number: PCT/KR2006/002496
(87) International publication number: WO 2007/001153

(56) References cited:
- EP-A1- 1 524 814
- WO-A2-03/003639
- WO-A2-2004/054283
- US-A1- 2004 253 954
- "Media independent handover" 20050301, [Online] 1 March 2005 (2005-03-01), pages 1-30, XP002551603 Retrieved from the Internet: URL:http://www.ieee802.org/21/doctree/2005 _Meeting_Docs/2005-03_meeting_d ocs/21-05-0240-00-0000-Joint_Harmonized_MI H_Proposal_Draft_Text.doc> [retrieved on 2009-10-20]
- DIRK TROSSEN GOVIND KRISHNAMURTHI HEMANT CHASKAR NOKIA RESEARCH CENTER ROBERT C CHALMERS UC SANTA BARBARA EUNSOO SHIM NEC LABS AME: "A Dynamic Protocol for Candidate Access-Router Discovery; draft-trossen-seamoby-dycard-01.txt" IETF STANDARD-WORKING-DRAFT, INTERNET ENGINEERING TASK FORCE, IETF, CH, no. 1, 14 March 2003 (2003-03-14), XP015005519 ISSN: 0000-0004
- JAMES KEMPF DOCOMO LABS USA RAJEEV KOODLI NOKIA RESEARCH CENTER: "NEighborhood Discovery (NED) for Wireless Networks; draft-kempf-mipshop-nhood-discovery-00.txt " IETF STANDARD-WORKING-DRAFT, INTERNET ENGINEERING TASK FORCE, IETF, CH, 1 June 2005 (2005-06-01), XP015040541 ISSN: 0000-0004
- KIM P.-S., KIM E.-T., LEE E.-H.: 'A Fast Handoff Scheme for Mobile IPv6 Based Wireless Networks' INFORMATION, COMMUNICATIONS AND SIGNAL PROCESSING, 2005 FIFTH INTERNATIONAL CONFERENCE 06 December 2005 - 06 December 2005, pages 669 - 672, XP010937401
- PYUNG-SOO KIM ET AL: "A Fast Handoff Scheme for Mobile IPv6 Based Wireless Networks", INFORMATION, COMMUNICATIONS AND SIGNAL PROCESSING, 2005 FIFTH INTERNAT IONAL CONFERENCE ON BANGKOK, THAILAND 06-09 DEC. 2005, PISCATAWAY, NJ, USA,IEEE, PISCATAWAY, NJ, USA, 6 December 2005 (2005-12-06), pages 669-672, XP010937401, DOI: 10.1109/ICICS.2005.1689131 ISBN: 978-0-7803-9283-0

## Description

### Technical Field

Aspects of invention relate to apparatus and methods to perform fast handovers. More particularly, aspects of the invention relate to an apparatus and a method to perform a fast handover, capable of determining whether to change an internet protocol (IP) using an identification (ID) of an access router included in media independent information service (MIIS) information when a mobile node performs a fast handover in a heterogeneous wireless network.

### Background Art

A rapid increase of users of mobile communication services has led to activation of mobile communication services supporting multimedia communications, and seamless communication services have been requested by mobile users. Accordingly, it has become important to achieve a fast handover in the wireless local area network (LAN) environment based on the Institute of Electrical and Electronics Engineers (IEEE) 802.11 standard specification.

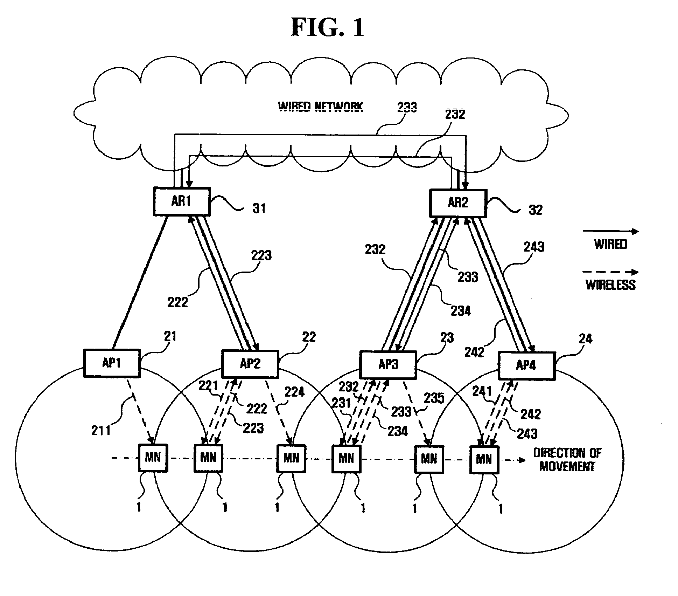

FIG. 1 illustrates a conventional wireless LAN environment. As illustrated, the wireless LAN environment includes a mobile node 1, a first access point 21, a second access point 22, a third access point 23, a fourth access point 24, a first access router 31 and a second access router 32. The conventional wireless LAN environment will be explained under the assumption that the mobile node 1 connected to the first access point 21 passes through respective cells managed by the first access point 21, the second access point 22, the third access point 23 and the fourth access point 24 in sequence. The first to fourth access points 21, 22, 23 and 24 periodically transmit respective beacon signals to indicate their cells, so that the moving mobile node 1 knows with which access point it can join a wired network.

In the communications denoted by 211, the mobile node 1 receives a beacon signal from the first access point 21. Based on the received beacon signal, the mobile node 1 becomes aware that it is positioned within the cell managed by the first access point 21. The mobile node 1 accesses a wired network by way of the first access point 21, as it did previously.

In the communications denoted by 221, the mobile node 1 receives a beacon signal from the second access point 22. Based on the received beacon signal, the mobile node 1 becomes aware that its cell has changed. Accordingly, the mobile node 1 conducts a handover due to the change of cell (i.e., a handover in a link layer). That is, the mobile node 1 becomes aware that it is positioned in the cell managed by the second access point 22, and changes its link layer connection with the first access point 21 to a link layer connection with the second access point 22. The mobile node 1 accesses a wired network by way of the second access point 22 with which it forms a new connection.

In communications denoted by 222, the mobile node 1 transmits to the first access router 31 via the second access point 22 a router solicitation for proxy advertisement (RtSolPr) frame including information that its cell has changed. The first access router 31 that has not received this information through any other access router becomes aware that the mobile node 1 is positioned within its subnet.

In communications denoted by 223, the first access router 31 transmits to the mobile node 1 via the second access point 22 a proxy router advertisement (PrRtAdv) frame including information that the subnet has not changed. The mobile node 1 that receives this information becomes aware that it is positioned in the subnet managed by the first access router 31. That is, the mobile node 1 becomes aware that it does not need to generate a new internet protocol (IP) address available for use in a new subnet. Accordingly, the mobile node 1 does not perform a handover due to the change of the subnet (i.e., a handover in the IP layer).

In communications denoted by 224, the mobile node 1 receives a beacon signal from the second access point 22. Based on the received beacon signal, the mobile node 1 becomes aware that it is positioned within the cell managed by the second access point 22. The mobile node 1 then connects to the wired network via the second access point 22 as it did previously.

In communications denoted by 231, the mobile node 1 receives a beacon signal from the third access point 23. Based on the received beacon signal, the mobile node 1 becomes aware that its cell has changed. Accordingly, the mobile node 1 performs a handover due to the change of the cell (i.e., a handover in a link layer). That is, the mobile node 1 becomes aware that it is positioned within the cell managed by the third access point 23 and changes its link layer connection with the second access point 22 to a link layer connection with the third access point 23. The mobile node 1 then accesses the wired network via the third access point 23 with which it forms a new connection.

In the communications denoted by 232, the mobile node 1 transmits to the first access router 31 and the second access router 32 via the third access point 23 a RtSolPr frame including information that its cell has changed. The first access router 31 that has received this information via the second access 32, which is another access router, becomes aware that the mobile node 1 has left its subnet.

In the communications denoted by 233, the first access router 31 transmits to the mobile node 1 via the second access router 32 and the third access point 23 a PrRtAdv frame including information that the subnet of the mobile node 1 has changed. The mobile node 1 that has received this information becomes aware that its subnet has changed. Accordingly, the mobile node 1 conducts a handover due to the change of the subnet (i.e., handover in an internet protocol (IP) layer). That is, the mobile node 1 becomes aware that it is positioned within the subnet managed by the second access router 32 and performs the communication operation denoted by 234.

In the communications denoted by 234, in order to generate a new IP address available for use in the subnet managed by the second access router 32, the mobile node 1 requests, via the third access point 23, the second access router 32 to provide a network prefix of the subnet managed by the access router 32. As a result, the mobile node 1 acquires the network prefix of the subnet managed by the second access router 32 and, based on the network prefix, generates a new IP address. The mobile node 1 performs communications with the subnet managed by the second access router 32 using the new IP address.

In the communications denoted by 235, the mobile node 1 receives a beacon signal from the third access point 23. Based on the received beacon signal, the mobile node 1 becomes aware that it is positioned within the cell managed by the third access point 23. The mobile node accesses a wired network via the third access point 23 as it did previously.

In the communications denoted by 241, the mobile node 1 receives a beacon signal from the fourth access point 24. Based on the received beacon signal, the mobile node 1 becomes aware that its cell has changed. Accordingly, the mobile node 1 performs a handover due to the change of the cell (i.e., a handover in the link layer). That is, the mobile node 1 becomes aware that it is positioned within the cell managed by the fourth access point 24, and changes its link layer connection with the third access point 23 to a link layer connection with the fourth access point 24. The mobile node 1 accesses the wired network via the fourth access point 24 with which it forms a new connection.

In the communications denoted by 242, the mobile node 1 transmits to the second access router 32 via the fourth access point 24 a RtSolPr frame including information that its cell has changed. The second access router 32 that has not received this information through another access router becomes aware that the mobile node 1 is positioned within its subnet.

In the communications denoted by 243, the second access router 32 transmits a PrRtAdv frame including information that its subnet has not changed to the mobile node 1 via the fourth access point 24. The mobile node 1 that received this information becomes aware that it is positioned within the subnet managed by the second access router 32. That is, the mobile node 1 becomes aware that it does not need to generate a new IP address available for use in a new subnet. Accordingly, the mobile node 1 does not perform a handover due to a change of the subnet (i.e., a handover in the IP layer).

As described thus far, a mobile node, which checked for a change of the cell through a beacon signal received through an access point, communicates with an access router in order to check for a subnet change between a previous cell and a new cell. In this regard, the mobile node communicates with the access router in order to determine whether to perform only a link-layer handover or both a link-layer handover and an IP-layer handover. Therefore, whenever the mobile node changes cells, the mobile node has to communicate with the access router via an access point, and this can prevent fast handovers.

United States Patent Application no. US 2004/253954 discloses a handover technique in which access router information provided in a beacon signal in order to enable the handover to be configured.

The "Media independent handover" proposal for IEEE 802.21 Working Group, available at http://www.ieee802.org/21/doctree/2005-Meeting_Docs/2005-03_meeting_docs/21-05-0240-00-0000-Joint_Harmonized_MIH_Proposal_Draft_Text.doc sets out a proposal for a media-independent handover technique.

Several example embodiments and aspects of the invention address the above-described and other problems, and promote eliminating unnecessary communications between a mobile node and an access router by providing the mobile node with information with which it determines whether to perform only a link layer handover or both the link layer handover and an internet protocol (IP) layer handover, which is included in media independent information service (MIIS) information.

According to an aspect of the present invention, there is provided a system to perform a handover according to claim 1.

According to another aspect of the present invention, there is provided a method of performing a handover according to claim 5.

Optional features are as set out in the dependent claims.

Additional aspects and/or advantages of the invention are set forth in the description which follows or are evident from the description, or can be learned by practice of the invention.

These and/or other aspects and advantages of the invention will become apparent and more readily appreciated from the following description of the embodiments, taken in conjunction with the accompanying drawings of which:
FIG. 1 illustrates a conventional wireless LAN environment;
FIG. 2 is a block diagram illustrating an access point according to an exemplary embodiment of the invention;
FIG. 3 is a block diagram illustrating an apparatus to perform fast handovers according to an exemplary embodiment of the invention;
FIG. 4 illustrates the format of an MIIS frame according to an exemplary embodiment of the invention;
FIG. 5 illustrates a wireless LAN environment according to an exemplary embodiment of the invention;
FIG. 6 illustrates a trigger frame according to an exemplary embodiment of the invention;
FIG. 7 is a flow chart illustrating operations of the access point according to an exemplary embodiment of the invention; and
FIG. 8 is a flow chart illustrating operations of an apparatus to perform fast handovers according to an exemplary embodiment of the invention.

Reference will now be made in detail to embodiments of the invention, examples of which are illustrated in the accompanying drawings, wherein like reference numerals refer to the like elements throughout. The embodiments are described below in order to explain aspects of the invention by referring to the figures, with well-known functions or constructions not necessarily being described in detail.

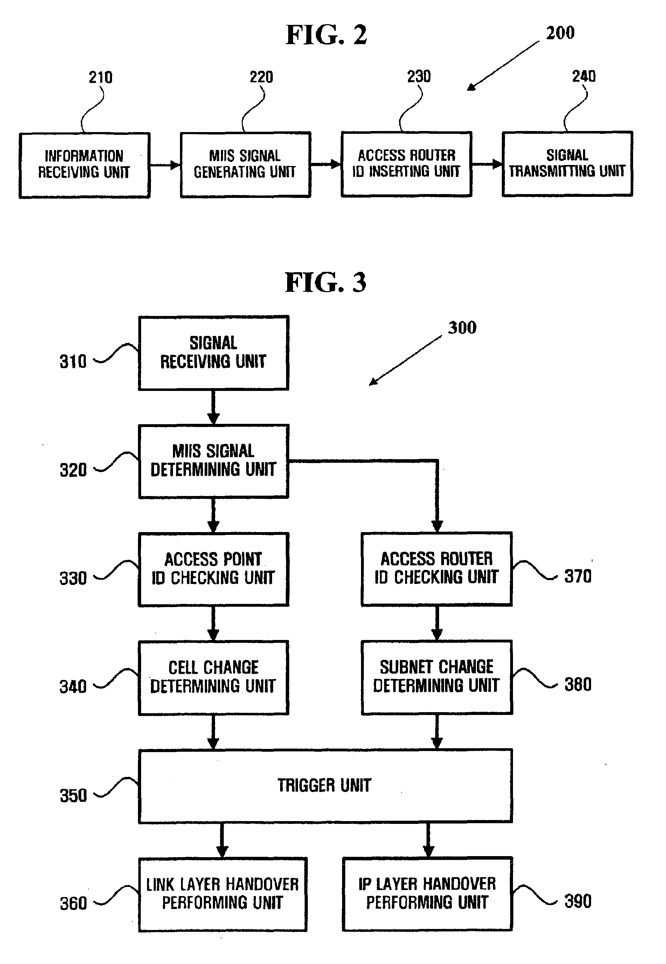

FIG. 2 is a block diagram illustrating an access point 200 according to an exemplary embodiment of the invention. As illustrated, the access point 200 includes an information-receiving unit 210, an MIIS-signal-generating unit 220, an access router identification (ID) inserting unit 230 and a signal-transmitting unit 240.

An access point, 200 in aspects of the invention, can indicate not only an access point to manage communications of a mobile node in an IEEE 802.11 network, but can also indicate an access point to manage communications of a mobile node in various wireless networks in addition to or instead of the IEEE 802.11 type network, for example. In this respect, a code division multiple access (C DMA) base station can also be included in the access point, according to aspects of the invention. In addition, the access point 200, according to aspects of the invention, can support a media dependent handover (MIH).

The information-receiving unit 210 receives information on a neighboring network which can include information on an access point of the neighboring network (access point ID). The information-receiving unit 210 receives information from the access point of the neighboring network, which supports the MIH; and an information e xchange due to the MIH can then be conducted.

The MIIS-signal-generating unit 220 generates an MIIS signal including information to perform a handover by a mobile node. The MIIS signal typically includes general network information, link layer information and higher layer service information. The general network information includes an access point ID, a network ID, the location of a neighboring access point and an IP version. The link layer information includes parameters of a link layer, such as link status , media access control (MAC) information and others, data transmission rate, security and quality of service. The upper, or higher, layer service information includes a multimedia message service (MMS), a mobile internet protocol (IP), and an upper layer service, such as a virtual private network, or application programs. However, it is understood that other layers and/or layer configurations are possible. The mobile node that received the MIIS signal becomes aware that it is positioned in a cell of a certain access point using the access point ID included in the MIIS signal.

The access-router-ID-inserting unit 230 inserts the ID of an access router into the MIIS signal generated by the MIIS-signal-generating unit 220. The access router ID indicates the ID of the access router connected directly to an access point, i.e., such as by wire. The mobile node determines whether to change its subnet, using the access router ID generate by the access-router-ID-inserting unit 230. The signal-transmitting unit 240 transmits the MIIS signal including the access router ID to the mobile node. According to an embodiment and aspects of the invention, addition of the access-router-ID-inserting unit 230 to the access points can minimize the change in configuration of the existing access points.

FIG. 3 is a block diagram illustrating an apparatus 300 to perform fast handovers according to an exemplary embodiment and aspects of the invention. The illustrated apparatus 300 includes a signal-receiving unit 310, an MIIS-signal-determining unit 320, an access-point-ID-checking unit 330, a cell-change-determining unit 340, a trigger unit 350, a link-layer-handover-performing unit 360, an access-router-ID-checking unit 370, a subnet-change-determining unit 380 and an IP-layer-handover-performing unit 390. The apparatus 300 can be included in various devices which access the access points, such as a computer, personal digital assistant and other like devices.

The signal-receiving unit 310 receives a signal from an access point, such as the access point 200. In this regard, the signal-receiving unit 310 receives an MIIS signal from the access point 200 including a cell where the apparatus 300 is positioned, or data from another mobile node. The received signal is transmitted to the MIIS-signal-determining unit 320. The MIIS-signal-determining unit 320 determines whether the transferred signal is an MIIS signal by referring to a predetermined field included in the received signal (frame). In this regard, the MIIS frame included in the MIIS signal can include a field to indicate whether the signal is an MIIS signal.

According to the IEEE 802.11 standard specification, an MIIS frame can be included in an IEEE 802.11 management frame. The MIIS frame can be constructed by setting the subtype field of the management frame to a predetermined value, for example. The MIIS-signal-determining unit 320 checks the subtype field value of the received frame in order to check whether the received signal is an MIIS signal. However, it is understood that the field can be included in other frames, such as where other standards are used.

When the signal is determined to be an MIIS signal by the MIIS-signal-determining unit 320, the access-point-ID-checking unit 330 checks the access point ID included in the determined MIIS signal. The access-point-ID-checking unit 330 can also check an ID access point through a specific field included in the received frame, for example. In this regard, a field to indicate an access point can be included in the MIIS signal.

The cell-change-determining unit 340 determines whether to change the cell in which a mobile node is positioned based on the result of the check by the access-point-ID-checking unit 330. When the access point ID checked by the access-point-ID-checking unit 330 is not the same as the ID of an access point checked previously, the cell-change-determining unit 340 determines that the cell of the mobile node has changed. The result is transmitted to the trigger unit 350 in a frame including a predetermined parameter (hereinafter referred to as a 'trigger frame.

The trigger unit 350 performs a trigger based on the determination by the cell-change-determining unit 340. When it is confirmed, based on the trigger frame transmitted by the cell-change-determining unit 340, that the cell has changed, the trigger unit 350 performs a layer-2 trigger. According to the layer-2 trigger, the link-layer-handover-performing unit 360 performs a handover in the link layer. In this regard, a connection with the previous access point is interrupted and a connection with a new access point is performed.

The access-router-ID-checking unit 370 checks the ID of an access router, which refers to information included in the MIIS signal determined by the MIIS-signal-determining unit 320 to be an MIIS signal (i.e., the MIIS signal received from the access point). In this regard, the MIIS signal can include a field to indicate an access router ID. The subnet-change-determining unit 380 determines whether to change the subnet of a mobile node according to the result of the check by the access-router-ID-checking unit 370 and, in this regard, the previously received access router ID is compared with the currently received access router ID. When the previously received access router ID and the currently received access router ID are not the same, the subnet-change-determining unit 380 determines to change the subnet of the mobile node. While not required in all aspects, a storage unit (not shown) to temporarily store the previously received access router ID can be provided in the apparatus 300 or can be otherwise accessed. The trigger frame transmitted by the subnet-change-determining unit 380 includes the determination result, and the trigger frame is transmitted to the trigger unit 350.

The trigger unit 350 performs a trigger based on the determination by the subnet-change-determining unit 380. When it is confirmed that the subnet has changed based on the trigger frame transmitted by the subnet-change-determining unit 380, the trigger unit 350 performs a layer-3 trigger. According to the layer-3 trigger, the IP-layer-handover-performing unit 390 performs a handover in the IP layer. In this regard, the IP-layer-handover-performing unit 390 acquires a network prefix of a new subnet and generates a new IP address available for use in the new subnet, and the mobile node can perform communications using the newly generated IP address.

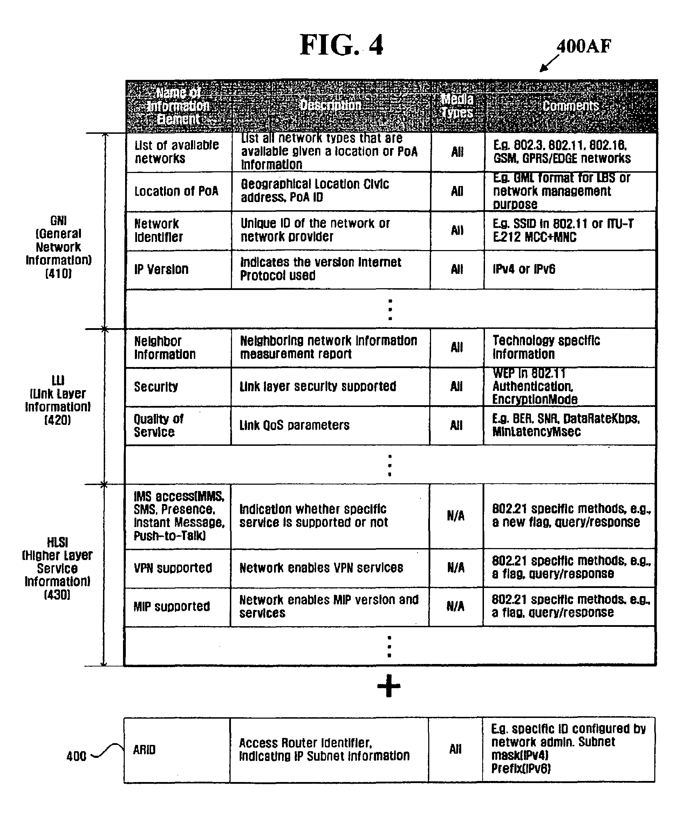

FIG. 4 illustrates the format of an MIIS frame 400AF according to an exemplary embodiment and aspects of the invention. The MIIS frame 400AF includes general network information 410, link layer information 420 and upper, or higher, layer service information 430. The general network information 410 includes fields to indicate a list of networks that can be supported, a position of an access point (an access point ID), a network ID, and an IP version. The link layer information 420 includes fields to indicate information on a neighboring network, security and quality of service. The upper, or higher, layer service information 430 includes fields to indicate upper, or higher, layer services, such as access to an IP multimedia subsystem (IMS), a virtual private network and a mobile IP, or application programs, for example.

The MIIS frame 400AF according to an embodiment and aspects of the invention, includes an access router ID (ARID) field 400; with the access router ID indicating a unique code assigned to each access router. The access router ID can be generated using a subnet of the access router or using an arbitrary value, for example.

The subnet-change-determining unit 380 can determine, based on the value included in the access router ID field 400, a subnet change due to movement of the apparatus 300. The previously stored access router ID is compared with the current access router ID received through the MIIS signal, and it is determined, by the subnet-change-determining unit 380, whether to change the subnet depending upon whether the previously stored access router ID and the current access router ID received through the MIIS signal are identical.

Based on the access router ID, the mobile node can determine whether to change its subnet. Different IDs can be assigned to each access router, or an ID based on the subnet of the mobile node can be assigned, for example. When an ID based on the subnet of the mobile node is assigned, there can be access routers having identical IDs. In this regard, the mobile node performs no subnet change even after the cell has changed; and the mobile node is regarded as having moved in the same subnet.

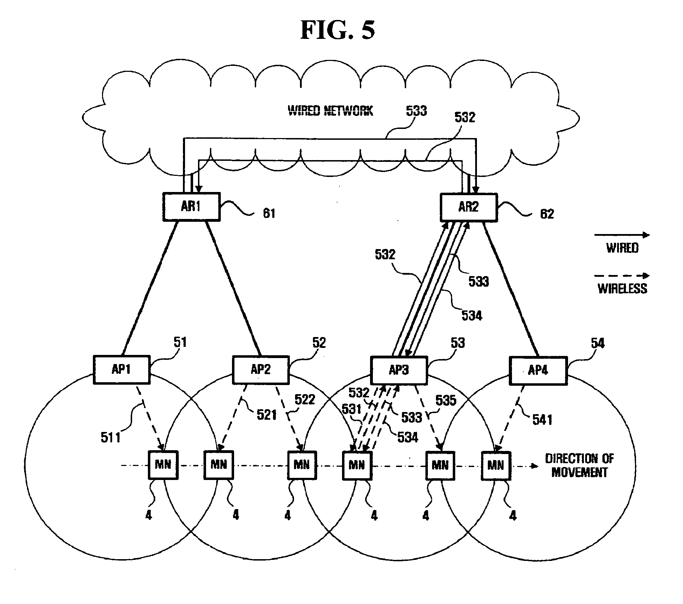

FIG. 5 illustrates a wireless LAN environment according to an exemplary embodiment and aspects of the invention. The wireless LAN environment includes a mobile node 4, a first access point 51, a second access point 52, a third access point 53, a fourth access point 54, a first access router 61 and a second access router 62.

It is assumed that the first access point 51 and the second access point 52 are homogeneous, and the third access point 53 and the fourth access point 54 are homogeneous, but the first and the second access points 51 and 52 are heterogeneous to the third and the fourth access points 53 and 54. Alternatively, it is understood that the first through fourth access points 51, 52, 53 and 54 can also all be homogeneous, for example, according to aspects of the invention. Further, as illustrated in FIG. 5, the exemplary embodiment is also described under the assumption that the mobile node 4 is connected to the first access point 51, and then passes through respective cells managed by the first access point 51, the second access point 52, the third access point 53 and the fourth access point 54 in sequence.

The first access point 51, the second access point 52, the third access point 53 and the fourth access point 54 each receive information on respective neighbor access points supporting the MIH, and each of the access points 51, 52, 53 and 54 periodically transmit an MIIS signal identifying the cell(s) respectively managed by each of the access points 51, 52, 53 and 54 , or receive an MIIS signal in response to a request by the mobile node 4, so that the mobile node 4 can know to which access point it can connect to the wired network. Also, the sent MIIS signal includes the ID of the access router connected to each access point.

In the communications denoted by 511, the mobile node 4 receives an MIIS signal from the first access point 51. Based on the received MIIS signal from the first access point 51, the mobile node 4 becomes aware that it is positioned within the cell managed by the first access point 51. The received MIIS signal includes the ID of the first access router 61 connected to the first access point 51, and the mobile node 4 temporarily stores the ID of the first access router 61. The mobile node 4 connects to the wired network via the first access point 51 as it did previously. The MIIS signal also includes information on a neighboring access point, such as the neighboring access point 52; and the mobile node 4 receives information on the neighboring second access point 52 and temporarily stores the information on the neighboring access point 52.

In the communications denoted by 521, the mobile node 4 receives an MIIS signal from the second access point 52. Based on the received MIIS signal from the second access point 52, the mobile node 4 becomes aware that its cell has changed. Accordingly, the mobile node 4 performs a handover due to the cell change (i.e., a handover in the link layer) by referring to the previously stored information on the second access point 52. In this regard, the mobile node 4 becomes aware that it is positioned within the cell managed by the second access point 52, and then the mobile node 4 changes its link layer connection with the first access point 51 to a link layer connection with the second access point 52. The mobile node 4 connects to the wired network via the second access point 52 with which it forms a new connection. Since the second access point 52 is included in the subnet managed by the first access router 61, the mobile node 4 receives an MIIS signal including the first access router 61 ID from the second access point 52. The mobile node 4 that received the MIIS signal including the access router ID compares the previously stored access router ID with the current access router ID. Since the access router ID stored in the 511 communication operation is identical to the access router ID received in the 521 communication operation, the mobile node 4 becomes aware that its subnet has not changed.

In the communications denoted by 522, the mobile node 4 receives an MIIS signal from the second access point 52. Based on the received MIIS signal, the mobile node 4 becomes aware that it is positioned within the cell managed by the second access point 52. The mobile node 4 connects to the wired network via the second access point 52 as it did previously. Since the second access point 52 resides in the subnet managed by the first access router 61, the mobile node 4 receives an MIIS signal including the first access router 61 ID from the second access point 52. The MIIS signal includes information on a neighboring access point, such as the first access point 51 or third access point 53. Accordingly, the mobile node 4 receives information on the first access point 51 and the third access point 53 (neighboring access points), and temporarily stores the information on the first access point 51 and the third access point 53.

In the communications denoted by 531, the mobile node receives an MIIS signal from the third access point 53. Based on the received MIIS signal, the mobile node 4 becomes aware, by comparing the previously stored information with the received MIIS signal, that it has changed cells, and that it is positioned in the cell of the third access point 53. Accordingly, the mobile node 4 performs a handover due to the cell change (i.e., a handover in the link layer). In this regard, the mobile node 4 becomes aware that it is positioned within the cell managed by the third access point 53 and changes its link layer connection with the second access point 52 to a link layer connection with the third access point 53. The mobile node accesses a wired network via the third access point 53 with which it forms a new connection. Since the third access point 53 resides in the subnet managed by the second access router 62, the mobile node 53 receives an MIIS signal including the access router ID of the second access router 62 from the third access point 53. The mobile node 4 that received the MIIS signal containing the access router ID compares the previously stored access router ID with the current access router ID. Since the access router ID stored in the 511 communication process is not identical to that received in the 531 communication process, the mobile node 4 determines that it has changed subnets.

In the communications denoted by 532, when it is determined that the subnet of the mobile node 4 has changed, the mobile node 4 sends information detailing that it has changed cells to the first access router 61 via the third access point 53 and the second access router 62. The first access router 61 that has received this information through the second access router 62 becomes aware that the mobile node 4 has left its subnet.

In the communications denoted by 533, the first access router 61 sends, via the second access router 62 and the third access point 53, information detailing that the subnet in which the mobile node 4 is positioned has changed. The mobile node 4 that received this information checks whether its subnet has changed. Accordingly, the mobile node 4 performs a handover due to the subnet change (i.e., a handover in the IP layer). In this regard, the mobile node 4 checks that it is positioned within the subnet managed by the second access router 62 and performs the 534 communication operation to be further described. Since the mobile node 4 receives information on its subnet change under the condition that its subnet is determined to have changed, the mobile node 4 does not become aware of the subnet change, but confirms the subnet change.

In the communications denoted by 534, the mobile node 4 sends the second access router 62, via the third access point 53, a request for a network prefix of the subnet managed by the second access router 62, to generate a new IP address available for use in the subnet managed by the second access router 62. In response to this request, the mobile node 4 obtains the network prefix of the subnet managed by the second access router 62, and generates a new IP address based on the network prefix. Using the new IP address, the mobile node 4 performs communications with the subnet managed by the second access router 62.

In the communications denoted by 535, the mobile node 4 receives an MIIS signal from the third access point 53. Based on the received MIIS signal, the mobile node 4 becomes aware that it is positioned within the cell managed by the second access point 53. As it did previously, the mobile node 4 accesses the wired network via the third access point 53. The MIIS signal contains information on a neighboring access point, such as the second access point 52 or the fourth access point 54. The mobile node 4 receives information on the second access point 52 and the fourth access point 54 (neighboring access points), and temporarily stores the information on the second access point 52 and the fourth access point 54.

In the communications denoted by 541, the mobile node 4 receives an MIIS signal from the fourth access point 54. Based on the received MIIS signal, the mobile node 4 becomes aware that its cell has changed. Accordingly, the mobile node 4 performs a handover due to the cell change, i.e., a handover in the link layer. In this regard, the mobile node 4 becomes aware that it is positioned within the cell managed by the fourth access point 54 and changes its link layer connection with the third access point 53 to a link layer connection with the fourth access point 54. The mobile node 4 accesses the wired network via the fourth access point 54 with which it forms a new connection.

As described above, the mobile node 4 can store network information on a neighbor cell before moving to the neighbor cell, and the mobile node 4 can confirm to which cell it has moved using the received MIIS signal after moving to the neighbor cell. The mobile node 4 performs communications with an access router only when it is determined that its subnet has changed from the previous subnet, thereby promoting to help eliminate unnecessary communications with other access routers.

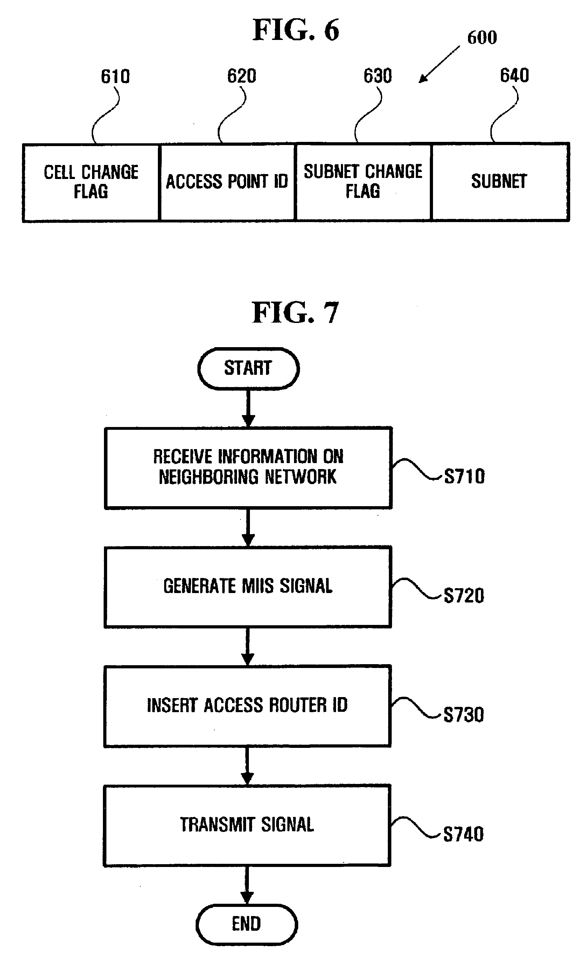

FIG. 6 illustrates a trigger frame 600, according to an exemplary embodiment and aspects of the invention, and used by the trigger unit 350. The trigger frame 600 includes a cell change flag 610, an access point ID 620, a subnet change flag 630 and a subnet 640. However, it is understood that the trigger frame 600 can include other elements instead of or in addition to the illustrated elements. The cell change flag 610 indicates whether the cell of the mobile node, such as the mobile node 4, has changed. The cell-change-determining unit 340 can set a value depending upon the cell change of the mobile node 4. When the cell of the mobile node 4 has not changed, the value is set to 0. When the cell of the mobile node 4 has changed, the value is set to 1, for example. The cell change flag 610 typically only indicates whether the cell has changed and, therefore, the cell change flag 610 can be realized by 1 bit, for example.

The access point ID 620 indicates the ID of a neighboring access point included in the MIIS signal. The trigger unit 350 checks the access point ID 620 when the value of the cell change flag 610 is 1, for example, indicating that the cell of the mobile node 4 has changed, and the mobile node 4 communicates with an access point using the new access point ID 620.

The subnet change flag 630 indicates whether the subnet of the mobile node 4 has changed. The subnet-change-determining unit 380 can set a value depending upon the subnet change of the mobile node 4. When the subnet of the mobile node 4 has not changed, the value is set to 0. When the subnet of the mobile node 4 has changed, the value is set to 1, for example. The subnet change flag 630 typically only indicates whether the subnet has changed and, therefore, the subnet change flag 630 can be realized by 1 bit, for example.

The subnet 640 indicates the new subnet of an access router. The trigger unit 350 checks the subnet 640 when the value of the subnet change flag 630 is 1, for example, indicating the subnet of the mobile node 4 has changed. The moving mobile node 4 performs communications using the IP address of the new subnet 620.

FIG. 7 illustrates operations of the access point 200 according to an exemplary embodiment and aspects of the invention. The access point 200 first collects, or receives, information on a neighbor, or neighboring, network at operation S710. The information on the neighbor, or neighboring, network can include information on a neighboring access point (access point ID). This information can be automatically provided by a network element, such as the router, and/or be manually input, for example.

The access point 200 generates an MIIS signal referring to the collected, or received, neighbor network information at operation S720. The generated MIIS signal includes an access point ID to indicate a cell region formed by a neighboring access point. The mobile node 4 checks whether the cell has changed based on the access point ID included in the MIIS signal.

After generation of the MIIS signal, the access point 200 inserts an access router ID into the generated MIIS signal at operation S730. The access router ID is the unique ID of the access router connected directly to the access point. The access router ID is used when the mobile node 4 checks for a subnet change. The access point 200 transmits the MIIS signal including the access router ID at operation S740. The access point 200 can broadcast the MIIS signal periodically or at the request of the mobile node 4, for example.

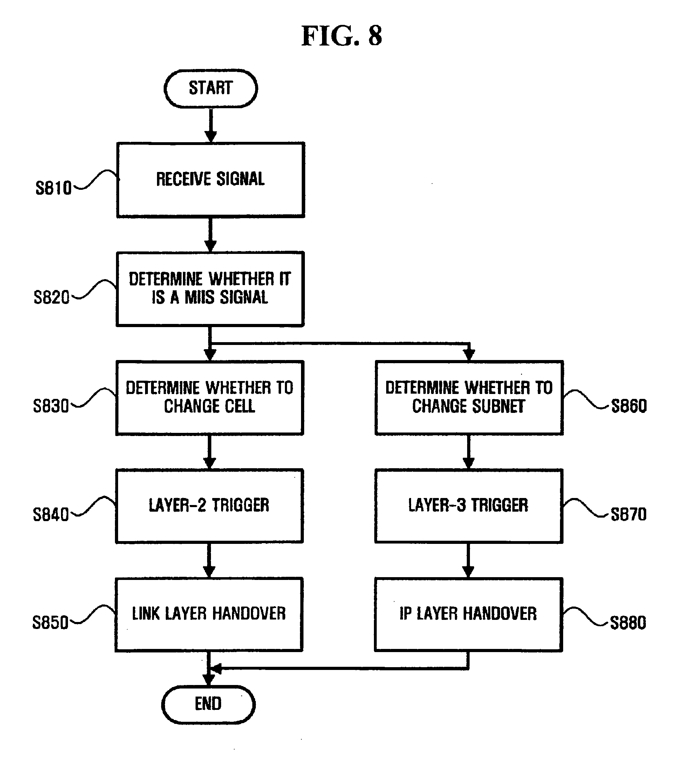

FIG. 8 is a flow chart illustrating operations of the apparatus 300 to perform handovers according to an exemplary embodiment and aspects of the invention. The mobile node, such as the mobile node 4, receives a signal from the access point, such as the access point 200, at operation S810. The mobile node 4 determines whether the received signal is a MISS signal at operation S820 by checking the subtype field value of the received frame, for example.

When it is determined that the received signal is an MIIS signal, the mobile node 4 checks the access point ID included in the determined MIIS signal, determines if a cell change has occurred at operation S830, and temporarily stores the received MIIS signal. The mobile node 4 can determine if a cell change has occurred by looking at the value of the access point ID field, for example. In this regard, the mobile node 4 determines whether a cell change has occurred by comparing the previous access point ID with the current access point ID, for example.

If a cell change has occurred, the mobile node 4 performs the layer-2 trigger at operation S840 and a link layer handover according to the layer-2 trigger at operation S850. In this regard, when it is determined that the mobile node 4 has changed cells, the mobile node 4 performs the handover in the link layer. When it is determined that the received signal is an MIIS signal, the mobile node 4 also checks the access router ID included in the MIIS signal. By comparing the previously stored access router ID with the currently checked access router ID, the mobile node 4 determines whether to perform a subnet change at operation S860.

If a subnet change has occurred, the mobile node 4 performs the layer-3 trigger at operation S870 and a handover according to the layer-3 trigger at operation S880. In this regard, when it is determined that the subnet has changed, the mobile node 4 performs the handover in the IP layer. The mobile node 4 obtains a network prefix of the new subnet, and generates a new IP address available for use in the new subnet.

### Industrial Applicability

As described above, the apparatus and the method to perform fast handovers according to the example embodiments and aspects of the invention can provide one or more of the following or other effects. One effect is that, by providing a mobile node with MIIS information including information on the basis of which it is determined whether to perform only the link layer handover or to perform both the link layer handover and the IP link handover, unnecessary communications between a mobile node and an access router can be eliminated or significantly reduced, to allow the mobile node to perform relatively fast handovers. Another effect is that, by adding only one element to an access point, a change in configuration of the existing access point can be minimized.

The foregoing embodiments, aspects and advantages are merely exemplary and are not to be construed as limiting the invention. Also, the description of the embodiments of the invention is intended to be illustrative, and not to limit the scope of the claims, and various other alternatives, modifications, and variations will be apparent to those skilled in the art. Further, while not required in all aspects, elements of the invention can be implemented using software and/or firmware readable by one or more processors. Therefore, although a few embodiments of the invention have been shown and described, it would be appreciated by those skilled in the art that changes may be made in the embodiments without departing from the invention, the scope of which is defined in the claims.

## Claims

1. A system to perform a handover, the system comprising an access point (52), a neighbouring access point (51, 53), an access router (61, 62) and a mobile node (4), wherein the access point (52) and the neighbouring access point (51) are included in the same subnet which is managed by a first access router (61), wherein the access point comprises:
an information-receiving unit (210) to receive access point ID information on a neighbouring access point from said neighbouring access point (51, 53);
an MIIS-signal-generating unit (220) to generate a media independent information service, MIIS, signal including the access point ID information on the neighbouring access point;
an access-router-identification ID-inserting unit (230) to insert an access router ID into the generated MIIS signal, wherein the access router ID is the unique ID of the access router connected directly to the access point;
and a signal-transmitting unit (240) to transmit the MIIS signal which includes the access router ID,
wherein the mobile node comprises:
a signal-receiving unit (310) to receive the MIIS signal transmitted by the access point;
a cell-change determining unit (340) to determine if a cell of the mobile node has changed by comparing a previous access point ID with the current access point ID included in the MIIS signal,
a subnet-change-determining unit (380) to determine if a subnet of a mobile node has changed by comparing a previous access router ID with the access router ID included in the MIIS signal;
a trigger unit (350) to perform a layer trigger, depending upon the determination result of whether the subnet change has occurred;
a link-layer-handover performing unit (360) to perform a handover in the link layer according to a layer-2 trigger, when the cell change has occurred, wherein the layer trigger is the layer-2 trigger, and
an IP-layer-handover performing unit (390) to perform a handover in the IP layer according to a layer-3 trigger when the subnet change has occurred, wherein the layer trigger is the layer-3 trigger.

2. The system of claim 1, wherein the access router ID comprises information sent by an access point included in the same subnet as the access point (200) which is managed by the access router (61).

3. The system claim 1 or claim 2, wherein the trigger unit (350) is adapted to receive a trigger frame (600) based upon information included in the MIIS signal, the trigger frame including a parameter indicating one or more of a cell change or a subnet change, and the trigger unit is adapted to perform the layer trigger with reference to the parameter included in the trigger frame.

4. The system of claim 3, wherein the trigger frame (600) comprises one or more of a cell change flag (610), a new access point ID (620), a subnet change flag (630), information on a new subnet (640), or combinations thereof.

5. A method of performing a handover for a mobile node (4) from an access point (52) to a neighbouring access point (51, 53), wherein the access point (52) and the neighbouring access point (51) are included in the same subnet which is managed by a first access router (61), the method comprising:
receiving at an information receiving unit (210) of the access point (52) access point ID information on a neighbouring access point (51, 53) from said neighbouring access point (51, 53);
generating at an MIIS-signal-generating unit (220) of the access point a media independent information service, MIIS, signal including the access point ID information on the neighbouring access point;
inserting at an inserting unit (230) of the access point an access router identification ID into the generated MIIS signal, wherein the access router ID is the unique ID of the access router connected directly to the access point;
and transmitting from the access point the MIIS signal which includes the access router ID,
receiving by a mobile node (4) the MIIS signal that includes the access router ID;
determining at a cell-change determining unit (340) of the mobile node if a cell of the mobile node has changed by comparing a previous access point ID with the current access point ID included in the MIIS signal,
determining at a subnet change-determining unit (380) of the mobile node if a subnet of the mobile node has changed by comparing a previous access router ID with the currently received access router ID included in the MIIS signal;
performing, at a trigger unit (350) of the mobile node, a layer trigger when it is determined that a cell of the mobile note has changed and when it is determined that a subnet of a mobile node has changed;
performing at a link-layer-handover performing unit (360) of the mobile node a handover in the link layer according to a layer-2 trigger, when the cell change has occurred, wherein the layer trigger is the layer-2 trigger, and
performing at an IP-layer-handover-performing unit (390) of the mobile node a handover in the IP layer according to a layer 3 trigger when the subnet change has occurred, wherein the layer trigger is the layer-3 trigger.

6. The method of claim 5, wherein the access router ID comprises information sent by an access point included in the same subnet.

7. The method of claim 5 or claim 6, wherein the performing of the layer trigger comprises:
receiving a frame (600) including a parameter indicating one or more of a cell change and the subnet change, and performing the layer trigger with reference to the parameter included in the frame.

8. The method of claim 7, wherein the frame (600) includes one or more of a cell change flag (610), a new access point ID (620), a subnet change flag (630), an information (640) on a new subnet, or combinations thereof.

9. The method of any one of claims 5 to 8, wherein the inserting the access router ID further comprises inserting the access router ID into an MIIS frame.

## Patentansprüche

1. System, um eine Übergabe durchzuführen, wobei das System einen Zugangspunkt (52), einen benachbarten Zugangspunkt (51, 53), einen Zugangsrouter (61, 62) und einen Mobilknoten (4) umfasst, wobei der Zugangspunkt (52) und der benachbarte Zugangspunkt (51) in demselben Subnetz enthalten sind, welches durch einen ersten Zugangsrouter (61) verwaltet wird, wobei der Zugangspunkt umfasst:
eine Informationsempfangseinheit (210), um Zugangspunkt-ID-Information eines benachbarten Zugangspunktes von dem benachbarten Zugangspunkt (51, 53) zu empfangen;
eine MIIS-Signalerzeugungseinheit (220), um ein Media-Independent-Information-Service, MIIS, -Signal zu erzeugen, welches die Zugangspunkt-ID-Information des benachbarten Zugangspunktes enthält;
eine Zugangsrouter-Identifikation ID-Einfügeeinheit (230), um eine Zugangsrouter-ID in das erzeugte MIIS-Signal einzufügen, wobei die Zugangsrouter-ID die eindeutige ID des Zugangsrouters ist, welcher direkt an den Zugangspunkt angeschlossen ist;
und eine Signalübertragungseinheit (240), um das MIIS-Signal zu übertragen, welches die Zugangsrouter-ID enthält,
wobei der Mobilknoten umfasst:
eine Signalempfangseinheit (310), um das MIIS-Signal zu empfangen, welches über den Zugangspunkt übertragen wird;
eine Zelländerungsbestimmungseinheit (340), um zu bestimmen, ob sich eine Zelle von dem Mobilknoten geändert hat, durch Vergleichen einer vorherigen Zugangspunkt-ID mit der gegenwärtigen Zugangspunkt-ID, die in dem MIIS-Signal enthalten ist,
eine Subnetzänderungsbestimmungseinheit (380), um zu bestimmen, ob sich ein Subnetz von einem Mobilknoten geändert hat, durch Vergleichen einer vorherigen Zugangsrouter-ID mit der Zugangsrouter-ID, die in dem MIIS-Signal enthalten ist;
eine Triggereinheit (350), um einen Schicht-Trigger in Abhängigkeit von dem Bestimmungsergebnis, ob die Subnetzänderung aufgetreten ist, durchzuführen;
eine Verbindungsschicht-Übergabedurchführungseinheit (360), um eine Übergabe in der Verbindungsschicht gemäß einem Schicht-2-Trigger durchzuführen, wenn die Zelländerung aufgetreten hat, wobei der Schicht-Trigger der Schicht-2-Trigger ist;
eine IP-Schicht-Übergabedurchführungseinheit (390), um eine Übergabe in der IP-Schicht gemäß einem Schicht-3-Trigger durchzuführen, wenn die Subnetzänderung aufgetreten ist, wobei der Schicht-Trigger der Schicht-3-Trigger ist.

2. System nach Anspruch 1, wobei die Zugangsrouter-ID Information umfasst, die durch einen Zugangspunkt gesendet wurde, der in demselben Subnetz wie der Zugangspunkt (200) enthalten ist, welcher durch den Zugangsrouter (61) verwaltet ist.

3. System nach Anspruch 1 oder Anspruch 2, wobei die Triggereinheit (350) dazu ausgelegt ist, ein Triggerframe (600) basierend auf Information, die in dem MIIS-Signal enthalten ist, zu empfangen, wobei das Triggerframe einen Parameter enthält, der eine Zelländerung und/oder eine Subnetzänderung anzeigt, und wobei die Triggereinheit dazu ausgelegt ist, den Schicht-Trigger mit Bezug auf den Parameter, der in dem Triggerframe enthalten ist, durchzuführen.

4. System nach Anspruch 3, wobei das Triggerframe (600) ein oder mehrere von einem Zelländerungs-Flag (610), einer neuen Zugangspunkt-ID (620), einem Subnetzänderungs-Flag (630), Information von einem neuen Subnetz (640) oder Kombinationen davon umfasst.

5. Verfahren zum Durchführen einer Übergabe für einen Mobilknoten (4) von einem Zugangspunkt (52) zu einem benachbarten Zugangspunkt (51, 53), wobei der Zugangspunkt (52) und der benachbarte Zugangspunkt (51) in demselben Subnetz enthalten sind, welches durch einen ersten Zugangsrouter (61) verwaltet wird, wobei das Verfahren umfasst:
Empfangen von Zugangspunkt-ID-Information eines benachbarten Zugangspunktes (51, 53) von dem benachbarten Zugangspunkt (51, 53) in einer Informationsempfangseinheit (210) von dem Zugangspunkt (52);
Erzeugen eines Media-Independent-Information-Service, MIIS, -Signals, das die Zugangspunkt-ID-Information des benachbarten Zugangspunktes enthält, in einer MIIS-Signalerzeugungseinheit (220) von dem Zugangspunkt;
Einfügen einer Zugangsrouter-Identifikation ID in das erzeugte MIIS-Signal an einer Einfügeeinheit (230) von dem Zugangspunkt; wobei die Zugangsrouter-ID die eindeutige ID des Zugangsrouters ist, welcher direkt an den Zugangspunkt angeschlossen ist;
und Übertragen des MIIS-Signals, welches die Zugangsrouter-ID enthält, von dem Zugangspunkt,
Empfangen des MIIS-Signals, das die Zugangsrouter-ID enthält, durch einen Mobilknoten (4);
Bestimmen, ob sich eine Zelle von dem Mobilknoten geändert hat, durch Vergleichen einer vorherigen Zugangspunkt-ID mit der gegenwärtigen Zugangspunkt-ID, die in dem MIIS-Signal enthalten ist, an einer Zelländerungsbestimmungseinheit (340) von dem Mobilknoten,
Bestimmen, ob sich ein Subnetz von dem Mobilknoten geändert hat, durch Vergleichen einer vorherigen Zugangsrouter-ID mit der gegenwärtig empfangenen Zugangsrouter-ID, die in dem MIIS-Signal enthalten ist, an einer Subnetzänderungsbestimmungseinheit (380) von dem Mobilknoten;
Durchführen eines Schicht-Triggers an einer Triggereinheit (350) von dem Mobilknoten, wenn es bestimmt wird, dass sich eine Zelle von dem Mobilknoten geändert hat, und wenn es bestimmt wird, dass sich ein Subnetz von einem Mobilknoten geändert hat;
Durchführen einer Übergabe in der Verbindungsschicht gemäß einem Schicht-2-Trigger an einer Verbindungsschicht-Übergabedurchführungseinheit (360) von dem Mobilknoten, wenn die Zelländerung aufgetreten ist, wobei der Schicht-Trigger der Schicht-2-Trigger ist, und
Durchführen einer Übergabe in der IP-Schicht gemäß einem Schicht-3-Trigger an einer IP-Schicht-Übergabedurchführungseinheit (390) von dem Mobilknoten, wenn die Subnetzänderung aufgetreten ist, wobei der Schicht-Trigger der Schicht-3-Trigger ist.

6. Verfahren nach Anspruch 5, wobei die Zugangsrouter-ID Information umfasst, die durch einen Zugangspunkt gesendet wurde, der in demselben Subnetz enthalten ist.

7. Verfahren nach Anspruch 5 oder Anspruch 6, wobei das Durchführen des Schicht-Triggers umfasst:
Empfangen eines Frames (600), das einen Parameter enthält, der eine Zelländerung und/oder die Subnetzänderung anzeigt, und Durchführen des Schicht-Triggers mit Bezug auf den Parameter, der in dem Frame enthalten ist.

8. Verfahren nach Anspruch 7, wobei das Frame (600) einen oder mehrere von einem Zelländerungs-Flag (610), einer neuen Zugangspunkt-ID (620), einem Subnetzänderungs-Flag (630) und Information (640) von einem neuen Subnetz oder Kombinationen davon enthält.

9. Verfahren nach einem der Ansprüche 5 bis 8, wobei das Einfügen der Zugangsrouter-ID ferner Einfügen der Zugangsrouter-ID in ein MIIS-Frame umfasst.

## Revendications

1. Système pour exécuter un transfert, le système comprenant un point d'accès (52), un point d'accès voisin (51, 53), un routeur d'accès (61, 62) et un noeud mobile (4), dans lequel le point d'accès (52) et le point d'accès voisin (51) sont inclus dans le même sous-réseau qui est géré par un premier routeur d'accès (61), le point d'accès comprenant :
une unité réceptrice d'informations (210) destinée à recevoir des informations d'ID de point d'accès sur un point d'accès voisin dudit point d'accès voisin (51, 53) ;
une unité génératrice de signal MIIS (220) destinée à générer un signal de service d'informations indépendant des médias, MIIS, incluant les informations d'ID de point d'accès sur le point d'accès voisin ;
une unité d'insertion d'ID d'identification de routeur d'accès (230) destinée à insérer un ID de routeur d'accès dans le signal MIIS généré, l'ID de routeur d'accès étant l'unique ID du routeur d'accès connecté directement au point d'accès ;
et une unité d'émission de signal (240) destinée à émettre le signal MIIS qui comprend l'ID de routeur d'accès,
dans lequel le noeud mobile comprend :
une unité réceptrice de signal (310) destinée à recevoir le signal MIIS émis par le point d'accès ;
une unité de détermination de changement de cellule (340) pour déterminer si une cellule du noeud mobile a changé en comparant un ID de point d'accès précédent à l'ID de point d'accès en cours inclus dans le signal MIIS,
une unité de détermination de changement de sous-réseau (380) destinée à déterminer si un sous-réseau d'un noeud mobile a changé en comparant un ID de routeur d'accès précédent à l'ID de routeur d'accès inclus dans le signal MIIS ;
une unité de déclenchement (350) destinée à exécuter un déclencheur de couche, en fonction du résultat de la détermination de la survenance ou non-survenance du changement de sous-réseau ;
une unité d'exécution de transfert de couche de liaison (360) destinée à exécuter un transfert dans la couche de liaison en fonction d'un déclencheur de couche 2, lorsque le changement de cellule s'est produit, le déclencheur de couche étant le déclencheur de couche 2, et
une unité d'exécution de transfert de couche d'IP (390) destinée à exécuter un transfert dans la couche d'IP en fonction d'un déclencheur de couche 3 lorsque le changement de sous-réseau s'est produit, le déclencheur de couche étant le déclencheur de couche 3.

2. Système selon la revendication 1, dans lequel l'ID du routeur d'accès comprend des informations envoyées par un point d'accès inclus dans le même sous-réseau en tant que point d'accès (200) géré par le routeur d'accès (61).

3. Système selon la revendication 1 ou la revendication 2, dans lequel l'unité de déclenchement (350) est conçue pour recevoir une trame de déclenchement (600) sur la base des informations incluses dans le signal MIIS, la trame de déclenchement comprenant un paramètre indiquant un ou plusieurs parmi un changement de cellule ou un changement de sous-réseau, et l'unité de déclenchement est conçue pour exécuter le déclencheur de couche en référence au paramètre inclus dans la trame de déclenchement.

4. Système selon la revendication 3, dans lequel la trame de déclenchement (600) comprend un ou plusieurs parmi un indicateur de changement de cellule (610), un nouvel ID de point d'accès (620), un indicateur de changement de sous-réseau (630), des informations sur un nouveau sous-réseau (640) ou des combinaisons de ceux-ci.

5. Procédé d'exécution d'un transfert pour un noeud mobile (4) d'un point d'accès (52) à un point d'accès voisin (51, 53), dans lequel le point d'accès (52) et le point d'accès voisin (51) sont inclus dans le même sous-réseau géré par un premier routeur d'accès (61), le procédé comprenant :
la réception dans une unité réceptrice d'informations (210) du point d'accès (52) d'informations d'ID de point d'accès sur un point d'accès voisin (51, 53) dudit point d'accès voisin (51, 53) ;
la génération dans une unité génératrice de signal MIIS (220) du point d'accès d'un signal de service d'informations indépendant des médias, MIIS, comprenant les informations d'ID de point d'accès sur le point d'accès voisin ;
l'insertion dans une unité d'insertion (230) du point d'accès d'un ID d'identification de routeur d'accès dans le signal MIIS généré, l'ID de routeur d'accès étant l'unique ID du routeur d'accès connecté directement au point d'accès ;
et la transmission depuis le point d'accès du signal MIIS qui comprend l'ID de routeur d'accès,
la réception par un noeud mobile (4) du signal MIIS qui comprend l'ID de routeur d'accès ;
la détermination dans une unité de détermination de changement de cellule (340) du noeud mobile du changement ou non-changement d'une cellule du noeud mobile en comparant un ID de point d'accès précédent à l'ID de point d'accès en cours inclus dans le signal MIIS,
la détermination dans une unité de détermination de changement de sous-réseau (380) du noeud mobile du changement ou non-changement d'un sous-réseau du noeud mobile en comparant un ID de routeur d'accès précédent à l'ID de routeur d'accès reçu actuellement inclus dans le signal MIIS ;
l'exécution, dans une unité de déclenchement (350) du noeud mobile, d'un déclencheur de couche, lorsqu'on détermine qu'une cellule du noeud mobile a changé ou lorsqu'on détermine qu'un sous-réseau d'un noeud mobile a changé ;
l'exécution dans une unité d'exécution de transfert de couche de liaison (360) du noeud mobile d'un transfert dans la couche de liaison en fonction d'un déclencheur de couche 2, lorsque le changement de cellule s'est produit, le déclencheur de couche étant le déclencheur de couche 2 et
l'exécution dans une unité d'exécution de transfert de couche d'IP (390) du noeud mobile d'un transfert dans la couche d'IP en fonction d'un déclencheur de couche 3 lorsque le changement de sous-réseau s'est produit, le déclencheur de couche étant le déclencheur de couche 3.

6. Procédé selon la revendication 5, dans lequel l'ID de routeur d'accès comprend des informations envoyées par un point d'accès inclus dans le même sous-réseau.

7. Procédé selon la revendication 5 ou la revendication 6, dans lequel l'exécution du déclencheur de couche comprend :
la réception d'une trame (600) comprenant un paramètre indiquant un ou plusieurs parmi un changement de cellule et un changement de sous-réseau et l'exécution du déclencheur de couche en référence au paramètre inclus dans la trame.

8. Procédé selon la revendication 7, dans lequel la trame (600) comprend un ou plusieurs parmi un indicateur de changement de cellule (610), un nouvel ID de point d'accès (620), un indicateur de changement de sous-réseau (630), des informations (640) sur un nouveau sous-réseau ou des combinaisons de ceux-ci.

9. Procédé selon l'une quelconque des revendications 5 à 8, dans lequel l'insertion de l'ID de routeur d'accès comprend en outre l'insertion de l'ID de routeur d'accès dans une trame de MIIS.
